# EUROPÄISCHE PATENTANMELDUNG

(11) **EP 1 593 989 A2**
(43) Veröffentlichungstag der Anmeldung: **09.11.2005**
(21) Anmeldenummer: 05007291.7
(22) Anmeldetag: 04.04.2005
(51) Int. Cl.: G01V 8/10

(54) **Optoelektronische Überwachungseinrichtung**

(30) Priorität: 05.05.2004 DE 202004007146 U
(71) Anmelder: SICK AG, 79183 Waldkirch, Breisgau (DE)
(72) Erfinder: Angenendt, Christoph, 79108 Freiburg (DE); Bergbach, Roland, 79341 Kenzingen (DE)
(74) Vertreter: Manitz, Finsterwald & Partner GbR

(57) **Zusammenfassung**

Optoelektronische Überwachungseinrichtung mit einem Lichtsender und einem Lichtempfänger, welche in voneinander getrennten Sender- bzw. Empfängergehäusen untergebracht sind, wobei Sendergehäuse und Empfängergehäuse in identischer Weise aufgebaut sind.

## Beschreibung

Die Erfindung betrifft eine optoelektronische Überwachungseinrichtung mit einem Lichtsender und einem Lichtempfänger, welche in voneinander getrennten Sender- bzw. Empfängergehäusen untergebracht sind.

Überwachungseinrichtungen der genannten Art sind in vielfältigen Ausführungsformen, beispielsweise als Lichtschranken, aus dem Stand der Technik bekannt. Sie werden zum Beispiel eingesetzt, um Gefahrenbereiche an Werkzeugmaschinen auf das unzulässige Eindringen von Objekten zu überwachen. In diesem Zusammenhang ist es insbesondere bekannt, Lichtsender und Lichtempfänger an einander gegenüberliegenden Seiten eines Tragarms eines beweglichen Oberwerkzeugs einer Gesenkpresse anzubringen, welche zum Biegen, Abkanten, Schneiden oder Stanzen von Werkstücken ausgelegt ist. Die Überwachungseinrichtung bewegt sich in diesem Fall gemeinsam mit dem Oberwerkzeug der Gesenkpresse, so dass in jeder Betriebsposition der Gesenkpresse überwacht werden, ob sich beispielsweise die Hand eines Bedieners im Bereich des Oberwerkzeugs befindet, so dass in diesem Fall ein Abschalten der Gesenkpresse erfolgen kann.

Nachteilig bei optoelektronischen Überwachungseinrichtungen der genannten Art ist die Tatsache, dass aufgrund der senderseitig und empfängerseitig unterschiedlichen Anforderungen regelmäßig individuelle Gehäuse für den Lichtsender und für den Lichtempfänger benötigt werden, was mit wirtschaftlichem Aufwand verbunden ist.

Eine Aufgabe der Erfindung besteht darin, eine optoelektronische Überwachungseinrichtung derart weiterzubilden, dass sie sich im Vergleich zu aus dem Stand der Technik bekannten optoelektronischen Überwachungseinrichtungen kostengünstiger fertigen lässt.

Erfindungsgemäß wird diese Aufgabe durch die Merkmale des Anspruchs 1 und insbesondere dadurch gelöst, dass Sendergehäuse und Empfängergehäuse in identischer Weise aufgebaut sind. Dies bedeutet, dass bevorzugt alle, zumindest jedoch ein Großteil der für den Aufbau der Gehäuse verwendeten Teile identisch sind. Gemäß der Erfindung wird lediglich gefordert, dass der Aufbau beider Gehäuse in gleicher bzw. identischer Weise erfolgt, die Gehäuse jedoch durchaus beispielsweise unterschiedliche Längen aufweisen können, so dass nicht alle Teile notwendigerweise identisch sein müssen.

Die erfindungsgemäß in identischer Weise aufgebauten Sender- und Empfängergehäuse ermöglichen es, den Herstellungsaufwand erfindungsgemäßer optoelektronischer Überwachungseinrichtungen zu reduzieren, da für beide Gehäuse identische oder zumindest weitgehend identische Bauteile verwendet werden können. Die Anzahl der für den Aufbau der beiden Gehäuse benötigten Teile lässt sich erfindungsgemäß also verringern, was wirtschaftlich von Vorteil ist.

Wenn die beiden Gehäuse weiterhin identische Befestigungselemente zu deren Anbringung an einer jeweils gewünschten Position beispielsweise eines Tragarms einer Gesenkpresse, besitzen, wird es weiterhin möglich, Lichtsender und Lichtempfänger gemeinsam mit den ihnen jeweils zugeordneten Gehäusen gegeneinander auszutauschen, um auf diese Weise die Position von Lichtsender und Lichtempfänger bezüglich des jeweiligen Anwendungsfalles zu optimieren. Durch eine derartige Optimierung lassen sich beispielsweise Leitungslängen zwischen Lichtsender/Lichtempfänger und einem Schaltschrank oder auch Störlichteinflüsse reduzieren.

Das Sender- und Empfängergehäuse kann jeweils aus einem rohrförmigen Abschnitt mit zwei einander gegenüberliegenden stirnseitigen Abschlusselementen bestehen. In diesem Fall lässt sich das Gehäuse auf einfache Weise aus lediglich drei Teilen aufbauen. Der rohrförmige Abschnitt besitzt dabei bevorzugt einen im Wesentlichen rechteckigen Querschnitt, so dass das Gehäuse letztlich im Wesentlichen eine Quaderform einnimmt.

Besonders vorteilhaft ist es, wenn der rohrförmige Abschnitt aus einem in beliebigen Längen ablängbaren Strangpressprofil gefertigt ist. In diesem Fall lassen sich Gehäuse mit unterschiedlichen Längen besonders einfach und problemlos dadurch herstellen, dass der rohrförmige Abschnitt einfach in der jeweils benötigten Länge abgelängt und stirnseitig mit den genannten Abschlusselementen verschlossen wird. Diese Möglichkeit der einfachen Herstellung von Gehäusen unterschiedlicher Länge ist in Verbindung mit optoelektronischen Überwachungseinrichtungen von besonderem Vorteil, da das Gehäuse so sehr einfach an verschiedene Brennweiten der jeweils verwendeten Optik in Abhängigkeit vom jeweiligen Anwendungsfall angepasst werden kann.

Der rohrförmige Abschnitt des Sendergehäuses kann die gleiche Länge wie der rohrförmige Abschnitt des Empfängergehäuses besitzen. Alternativ ist es aber auch möglich, Sender- und Empfängergehäuse mit unterschiedlichen Längen vorzusehen.

Vorteilhaft ist es ferner, wenn auf der Innenseite des rohrförmigen Abschnitts im Strangpressverfahren gefertigte Haltenuten für zumindest eine Elektronikplatine vorgesehen sind. So lässt sich eine insbesondere für den Lichtempfänger benötigte Elektronikplatine mit der zugehörigen Auswerteeinheit problemlos und kostengünstig im Gehäuse befestigen.

Ein stirnseitiges Abschlusselement des Gehäuses kann eine Kabeldurchführung einschließlich einer Zugentlastung aufweisen, wobei die Kabeldurchführung wahlweise für Sender- oder Empfängerkabel dienen kann.

Ein stirnseitiges Abschlusselement, bevorzugt dasjenige, welches nicht mit einer Kabeldurchführung versehen ist, kann eine Optik aufweisen, welche insbesondere unverändert für den Lichtsender als auch für den Lichtempfänger einsetzbar ist. Falls die Optik sowohl für den Lichtsender als auch für den Lichtempfänger verwendbar ist, lässt sich hierdurch eine weitere Reduzierung der Anzahl der unterschiedlichen Bauteile erzielen, welche für die Herstellung der optoelektronischen Überwachungseinrichtung benötigt werden.

Eines der beiden stirnseitigen Abschlusselemente kann eine Durchbrechung für ein Anzeigeelement aufweisen, welches seinerseits mit einer im Gehäuse angeordneten Platine gekoppelt ist. Ein solches Anzeigeelement kann beispielsweise den Betriebszustand von Lichtsender oder Lichtempfänger signalisieren.

Das Gehäuse ist erfindungsgemäß mit einer Justageplatte koppelbar, welche an dem Tragarm eines Oberwerkzeugs einer Gesenkpresse anbringbar ist. Dabei ist es von Vorteil, wenn die Justageplatte über Befestigungsbolzen mit dem Gehäuse verbunden ist, wobei die Befestigungsbolzen am rohrförmigen Abschnitt und/oder an den stirnseitigen Abschlusselementen angebracht sind. Besonders bevorzugt ist es, wenn die Relativposition der Befestigungsbolzen zueinander für alle Gehäuselängen gleich ist, so dass Gehäuse unterschiedlicher Länge an den dafür jeweils vorgesehenen Befestigungspositionen einer Gesenkpresse anbringbar und auch die Gehäuse von Lichtsender und Lichtempfänger problemlos gegeneinander austauschbar sind, da sie alle untereinander gleiche Anschlusselemente bzw. Befestigungsbolzen aufweisen.

Weitere bevorzugte Ausführungsformen der Erfindung sind in den Unteransprüchen beschrieben.

Die Erfindung wird nachfolgend anhand eines Ausführungsbeispiels unter Bezugnahme auf die Figuren erläutert; in diesen zeigen:
- Fig. 1: eine Explosionszeichnung einer perspektivischen Ansicht eines erfindungsgemäßen Gehäuses,
- Fig. 2: eine Darstellung gemäß Fig. 1 aus einer gegenüber 1 veränderten Perspektive, und
- Fig. 3: eine perspektivische Darstellung eines montierten erfindungsgemäßen Gehäuses gemäß den Figuren 1 und 2 mit einer gegenüber den Figuren 1 und 2 modifizierten Justageplatte.

Die beiden Figuren zeigen ein Gehäuse, welches sowohl für die Unterbringung eines Lichtsenders als auch für die Unterbringung eines Lichtempfängers geeignet ist. Es besteht im Wesentlichen aus einem rohrförmigen, insbesondere aus Aluminium hergestellten Abschnitt 1, welcher einen rechteckigen Querschnitt besitzt und aus einem Strangpressprofil gefertigt ist sowie aus zwei einander gegenüberliegenden stirnseitigen Abschlusselementen 2, 3, welche stirnseitig mit dem rohrförmigen Abschnitt 1 verschraubbar sind. Im verschraubten Zustand bildet die Einheit aus rohrförmigem Abschnitt 1 und stirnseitigen Abschlusselementen 2, 3 ein abgeschlossenes, quaderförmiges Gehäuse.

In Längsrichtung des rohrförmigen Abschnitts 1 erstrecken sich in dessen unteren Bereich aus den Figuren nicht ersichtliche, einander zugewandte Haltenuten, in welche eine Elektronikplatine 4 eingeschoben ist. Diese Elektronikplatine ist auf ihrem dem stirnseitigen Abschlusselement 2 zugewandten Ende mit Steckkontakten 5 versehen, welche mit komplementär ausgebildeten Steckkontakten koppelbar sind, die innerhalb des kappenförmigen, stirnseitigen Abschlusselements 2 vorgesehen sind. Letztgenannte Steckkontakte sind wiederum mit Kabeln verbunden, welche über drei Kabeldurchführungen 6 mit Zugentlastung aus dem kappenförmigen stirnseitigen Abschlusselement 2 herausführbar sind.

Es ist ferner eine Halteplatte 7 vorgesehen, die sich senkrecht zur Längsrichtung des rohrförmigen Abschnitts 1 erstreckt und innerhalb dieses rohrförmigen Abschnitts mit diesem verschraubt werden kann. An der Halteplatte 7 lässt sich sowohl ein Lichtsender als auch ein Lichtempfänger anbringen.

Die Elektronikplatine 4 besitzt auf ihrer dem stirnseitigen Abschlusselement 3 zugewandten Seite Anzeigeelemente 8, für welche innerhalb des stirnseitigen Abschlusselements 3 eine Durchbrechung 9 bzw. ein Sichtfenster vorgesehen ist, so dass die Anzeigeelemente 8 beigeschlossenem Gehäuse von außen gut sichtbar sind.

Im stirnseitigen Abschlusselement 3 ist über ein Feingewinde eine Optik 10 angeordnet, welche sowohl für einen Lichtsender als auch für einen Lichtempfänger genutzt werden kann. Das Feingewinde ermöglicht es, durch ein Verdrehen der Optik 10 eine Feinjustage der Optik 10 gegenüber Lichtsender/Lichtempfänger vorzunehmen.

Der rohrförmige Abschnitt 1 ist an seiner Oberseite mit einem Befestigungsbolzen 11 versehen, welcher an den rohrförmigen Abschnitt 1 angeschweißt oder angeschraubt ist. Weiterhin ist das stirnseitige Abschlusselement 3 ebenfalls auf seiner Oberseite mit zwei Befestigungsbolzen 12 versehen.

Auf die drei Befestigungsbolzen 11, 12 ist eine Justageplatte 13, welche für jeden Befestigungsbolzen 11, 12 jeweils eine Durchbrechung 14 besitzt, aufsteckbar. Die Relativposition zwischen den Befestigungsbolzen 11, 12 eines fertig montierten Gehäuses ist immer gleich, auch wenn der rohrförmige Abschnitt 1 des Gehäuses jeweils mit unterschiedlichen Längen gefertigt wird. Auf diese Weise können Gehäuse unterschiedlicher Länge an eine einheitlich ausgebildete Justageplatte 13 über die Befestigungsbolzen 11, 12 angeschlossen werden.

Die Justageplatte 13 weist schließlich noch ein Anschlusselement 15 auf, über welches die Justageplatte 13 beispielsweise am Tragarm einer Gesenkbiegepresse anbringbar ist.

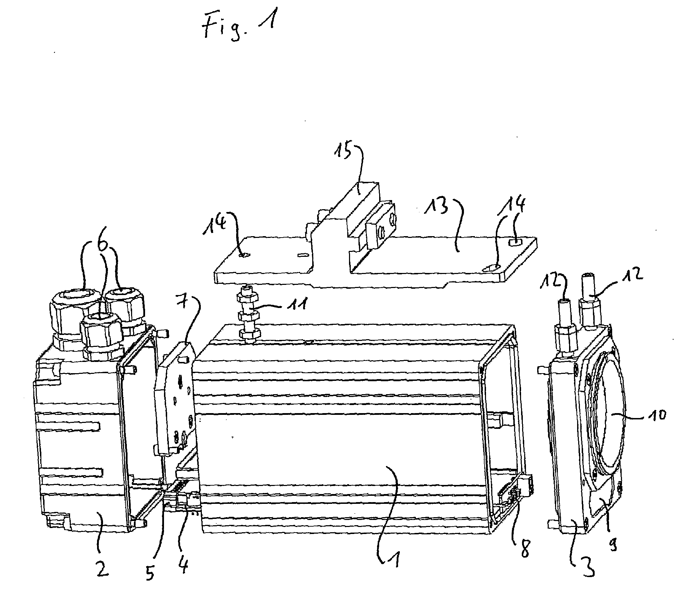

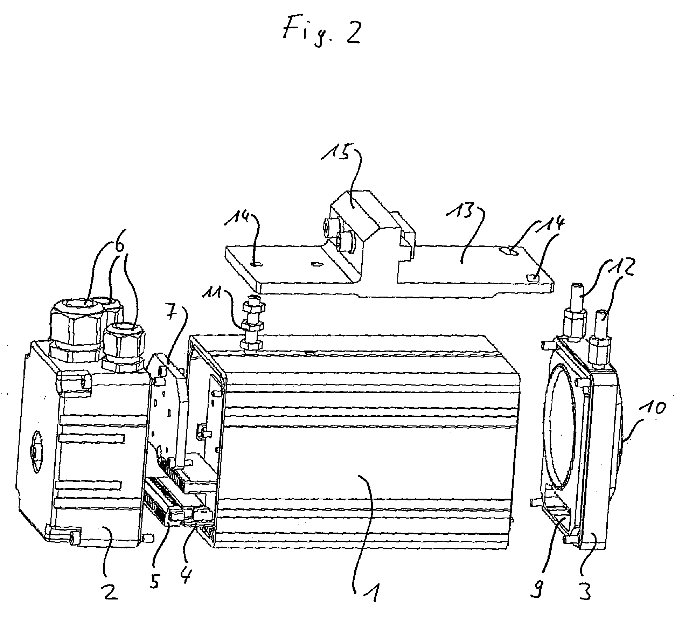

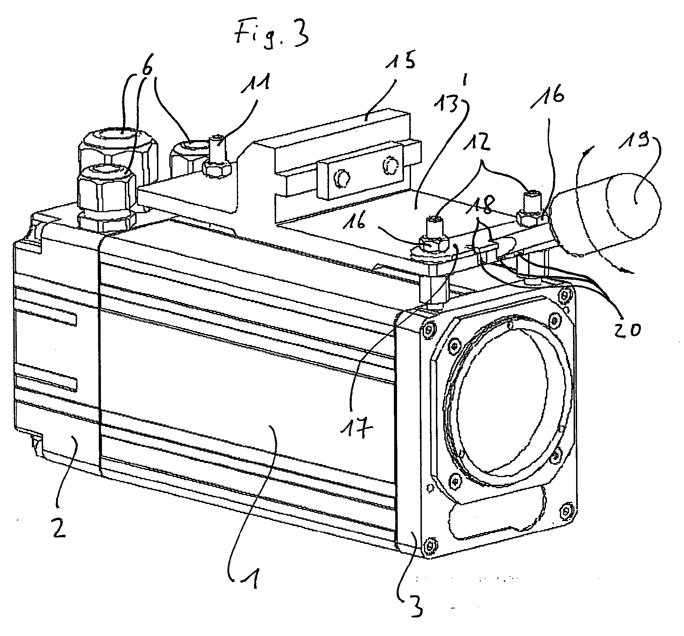

Fig. 3 zeigt eine perspektivische Ansicht eines erfindungsgemäßen Gehäuses, welches dem Gehäuse gemäß den Figuren 1 und 2 entspricht, in Fig. 3 jedoch im montierten Zustand dargestellt ist.

Das im Wesentlichen aus dem rohrförmigen Abschnitt 1 und den stirnseitigen Abschlusselementen 2, 3 bestehende Gehäuse ist gemäß Fig. 3 mit einer gegenüber den Figuren 1 und 2 modifizierten Justageplatte 13' gekoppelt. Die Justageplatte 13' besitzt eine kreisrunde Durchbrechung, durch welche der Befestigungsbolzen 11 gesteckt ist. Die Durchmesser von Durchbrechung und Befestigungsbolzen 11 sind derart aneinander angepasst, dass der Bolzen 11 problemlos durch die Durchbrechung gesteckt werden kann, in dieser jedoch mit geringstmöglichem Spiel derart gehalten ist, dass ein Verdrehen der Justageplatte 13' um die Längsachse des Befestigungsbolzens 11 möglich bleibt.

Den beiden weiteren Befestigungsbolzen 12 ist in der Justageplatte 13' jeweils ein Langloch zugeordnet, durch welches sich der jeweilige Befestigungsbolzen 12 erstreckt. Diese Langlöcher ermöglichen, dass die Justageplatte 13' in einem kleinen Winkelbereich um den Befestigungsbolzen 11 gedreht werden kann, wenn alle Befestigungsbolzen 11, 12 in die kreisrunde Durchbrechung bzw. die Langlöcher der Justageplatte 13' eingeführt sind.

Zwischen der Justageplatte 13' und den dem Befestigungsbolzen 12 zugeordneten Befestigungsmuttern 16 ist eine Stahlplatte 17 angeordnet, welche in ihren beiden einander abgewandten Endbereichen jeweils eine kreisrunde Durchbrechung aufweist, in der die Befestigungsbolzen 12 weitestgehend spielfrei aufgenommen sind.

Die Stahlplatte 17 weist an ihrer dem Befestigungsbolzen 11 abgewandten Längsseite drei voneinander beabstandete Kerben 18 auf, von denen in Fig. 3 lediglich zwei zu sehen sind, da die dritte Kerbe durch einen schematisch dargestellten Schraubendreher 19 verdeckt ist. Den drei Kerben 18 sind drei weitere Kerben 20 zugeordnet, welche sich in einer ebenfalls dem Befestigungsbolzen 11 abgewandten Stirnseite der Justageplatte 13' befinden. Der Abstand zweier benachbarter Kerben 20 der Justageplatte 13' ist geringer als der Abstand zweiter benachbarter Kerben 18 der Stahlplatte 17. Die beiden mittleren Kerben 18, 20 sind zueinander ausgerichtet, wenn sich die Befestigungsbolzen 12 jeweils im mittleren Bereich der ihnen zugeordneten Langlöcher der Justageplatte 13' befinden.

Bei einer Montage des in Fig. 3 dargestellten Gehäuses ist es nötig, dieses um den Befestigungsbolzen 11 im Rahmen einer Justage um einen geringen Winkelbereich verdrehen zu können. Hierbei muss insbesondere eine sehr feine Justage in möglichst kleinen Winkelschritten möglich sein.

Ein Verdrehen des Gehäuses von Hand gestaltet sich schwierig, da die Befestigungsmuttern 16 während des Justierens bzw. während des Verdrehens des Gehäuses um den Befestigungsbolzen 11 schon relativ fest angezogen sein müssen, um beim endgültigen Anziehen der Befestigungsmuttern 16 das Gehäuse nicht mehr zu verdrehen.

Um den genannten Justagevorgang zu erleichtern, sind die Stahlplatte 17 sowie die Kerben 18, 20 vorgesehen. Wenn das Gehäuse ausgehend von seiner Mittelstellung, in welcher sich die Befestigungsbolzen 12 mittig in den ihnen zugeordneten Langlöchern befinden, um den Befestigungsbolzen 11 verschwenkt werden soll, wird ein Schraubendreher 19 in die beiden mittleren Kerben 18, 19 eingeführt. Durch ein Verdrehen des Schraubendrehers 19 lässt sich dann das Gehäuse um den Befestigungsbolzen 11 verschwenken. Falls über die mittleren Kerben 18, 20 ein maximales Verschwenken erreicht wurde und noch ein weiteres Verschwenken nötig ist, wird der Schraubendreher 19, je nach Bedarf, in die linken oder die rechten Kerben 18, 20 eingeführt, so dass über eine weitere Drehung des Schraubendrehers 19 eine Fortsetzung der über die mittleren Kerben 18, 20 bewirkten Schwenkbewegungen möglich ist. Diese Fortsetzung der Schwenkbewegung wird insbesondere dadurch erreicht, dass die benachbarten Kerben 18, wie bereits erwähnt, einen größeren Abstand zueinander haben als die benachbarten Kerben 20. Insgesamt lässt sich im dargestellten Ausführungsbeispiel durch die Kerben 18, 20 ein Verschwenken des Gehäuses um den Befestigungsbolzen 11 um ungefähr +/- 3° erreichen.

Der beschriebene Justagevorgang ermöglicht ein sehr feines Verstellen des Gehäuses relativ zur Justageplatte 13' bei gleichzeitig geringem Zeitaufwand. Nach Abschluss des Justagevorgangs können die Befestigungsmuttern 16 vollständig festgezogen werden, so dass ein weiteres Verschwenken um die Befestigungsbolzen 11 nicht mehr möglich ist.

### Bezugszeichenliste

- 1: rohrförmiger Abschnitt
- 2: stirnseitiges Abschlusselement
- 3: stirnseitiges Abschlusselement
- 4: Elektronikplatine
- 5: Steckkontakte
- 6: Kabeldurchführung
- 7: Halteplatte
- 8: Anzeigeelemente
- 9: Durchbrechung
- 10: Optik
- 11: Befestigungsbolzen
- 12: Befestigungsbolzen
- 13: Justageplatte
- 13': Justageplatte
- 14: Durchbrechungen
- 15: Anschlusselement
- 16: Befestigungsmutter
- 17: Stahlplatte
- 18: Kerben
- 19: Schraubendreher
- 20: Kerben

## Patentansprüche

1. Optoelektronische Überwachungseinrichtung mit einem Lichtsender und einem Lichtempfänger, welche in voneinander getrennten Sender- bzw. Empfängergehäusen untergebracht sind,
**dadurch gekennzeichnet,**
**dass** Sendergehäuse und Empfängergehäuse in identischer Weise aufgebaut sind.

2. Optoelektronische Überwachungseinrichtung nach Anspruch 1,
**dadurch gekennzeichnet,**
**dass** Sender- und Empfängergehäuse jeweils aus einem rohrförmigen Abschnitt (1) mit zwei einander gegenüberliegenden stirnseitigen Abschlusselementen (2, 3) bestehen, wobei insbesondere der rohrförmige Abschnitt (1) einen im Wesentlichen rechteckigen Querschnitt besitzt.

3. Optoelektronische Überwachungseinrichtung nach Anspruch 2,
**dadurch gekennzeichnet,**
**dass** der rohrförmige Abschnitt (1) aus einem in beliebigen Längen ablängbaren Strangpressprofil gefertigt ist.

4. Optoelektronische Überwachungseinrichtung nach einem der Ansprüche 2 oder 3,
**dadurch gekennzeichnet,**
**dass** der rohrförmige Abschnitt (1) des Sendergehäuses entweder die gleiche Länge wie der rohrförmige Abschnitt des Empfängergehäuses besitzt oder eine von der Länge des rohrförmigen Abschnitts des Empfängergehäuses verschiedene Länge besitzt.

5. Optoelektronische Überwachungseinrichtung nach einem der Ansprüche 2 bis 4,
**dadurch gekennzeichnet,**
**dass** der rohrförmige Abschnitt (1) aus Aluminium besteht, und/oder dass auf der Innenseite des rohrförmigen Abschnitts (1) im Strangpressverfahren gefertigte Haltenuten für zumindest eine Elektronikplatine (4) vorgesehen sind.

6. Optoelektronische Überwachungseinrichtung nach einem der Ansprüche 2 bis 5,
**dadurch gekennzeichnet,**
**dass** ein stirnseitiges Abschlusselement (2) eine Kabeldurchführung (6) einschließlich einer Zugentlastung aufweist.

7. Optoelektronische Überwachungseinrichtung nach einem der Ansprüche 2 bis 6,
**dadurch gekennzeichnet,**
**dass** ein stirnseitiges Abschlusselement (3) mit einer Optik (10) versehen ist, welche insbesondere unverändert für den Lichtsender als auch für den Lichtempfänger einsetzbar ist.

8. Optoelektronische Überwachungseinrichtung nach einem der Ansprüche 2 bis 7,
**dadurch gekennzeichnet,**
**dass** ein stirnseitiges Abschlusselement (3) eine Durchbrechung (9) für ein Anzeigeelement (8) aufweist, welches mit einer im Gehäuse angeordneten Platine (4) gekoppelt ist.

9. Optoelektronische Überwachungseinrichtung nach einem der vorhergehenden Ansprüche,
**dadurch gekennzeichnet,**
**dass** das Gehäuse mit einer Justageplatte (13) koppelbar ist, welche an den Tragarm eines Oberwerkzeugs einer Gesenkpresse zum Biegen, Abkanten, Schneiden oder Stanzen von Werkstücken anbringbar ist, und welche insbesondere über Befestigungsbolzen (11, 12) mit dem Gehäuse verbunden ist, wobei die Befestigungsbolzen (11, 12) am rohrförmigen Abschnitt (1) und/oder an den stirnseitigen Abschlusselementen (2, 3) angebracht sind.

10. Optoelektronische Überwachungseinrichtung nach Anspruch 9,
**dadurch gekennzeichnet ,**
**dass** die Relativposition der Befestigungsbolzen (11, 12) zueinander für alle Gehäuselängen gleich ist.
